Europäisches Patentamt

European Patent Office

Office européen des brevets

(19)

(11) Veröffentlichungsnummer: **0 318 904**
**A2**

(12) **EUROPÄISCHE PATENTANMELDUNG**

(21) Anmeldenummer: **88119853.5**

(22) Anmeldetag: **29.11.88**

(51) Int. Cl.⁴: **F02B 43/10 , F02B 53/02**

(30) Priorität: **04.12.87 DE 3741145**

(43) Veröffentlichungstag der Anmeldung:
**07.06.89 Patentblatt 89/23**

(84) Benannte Vertragsstaaten:
**CH FR GB LI NL**

(71) Anmelder: **Deutsche Forschungs- und
Versuchsanstalt für Luft- und Raumfahrt e.V.**

**D-5300 Bonn(DE)**

(72) Erfinder: **Nieratschker, Willi, Dipl.-Ing.
Birkenstrasse 27
D-7403 Ammerbuch 4(DE)**
Erfinder: **Peschka, Walter, Prof. Dr. Ing. habil.
Schöneberger Weg
D-7032 Sindelfingen(DE)**

(74) Vertreter: **Hoeger, Stellrecht & Partner
Uhlandstrasse 14 c
D-7000 Stuttgart 1(DE)**

(54) **Aufbereitungssystem für Flüssigwasserstoff.**

(57) Um ein Aufbereitungssystem für Flüssigwasserstoff mit einem Speichertank und mit einer über eine Saugleitung mit dem Speichertank verbundenen und außerhalb desselben angeordneten Fördereinheit, umfassend eine Förderpumpe, welche druckseitig mit einer Motorzuleitung in Verbindung steht, derart zu verbessern, daß die Förderpumpe ständig auf Betriebstemperatur gehalten werden kann, wird vorgeschlagen, daß die Fördereinheit einen die Förderpumpe vollständig umgebenden Kühlspeichermantel aufweist, welcher von druckseitig aus der Förderpumpe austretendem Wasserstoff durchströmt ist.

EP 0 318 904 A2

Xerox Copy Centre

## Aufbereitungssytem für Flüssigwasserstoff

Die Erfindung betrifft ein Aufbereitungssystem für Flüssigwasserstoff mit einem Speichertank und mit einer über eine Saugleitung mit dem Speichertank verbundenen und außerhalb desselben angeordneten Fördereinheit, umfassend eine Förderpumpe, welche druckseitig mit einer Motorzuleitung in Verbindung steht.

Ein derartiges Aufbereitungssystem für Flüssigwasserstoff ist bereits aus der DE-OS 33 42 582.5 bekannt. Bei diesem Aufbereitungssystem wird der kryogengespeicherte Flüssigwasserstoff bei laufender Förderpumpe von dieser dem Motor mit dem entsprechenden Druck zugeführt. Allerdings besteht das Problem, daß die Förderpumpe bei Inbetriebnahme des Aufbereitungssystems kaltgefahren werden muß, wozu eine zusätzliche Hilfsgaspumpe erforderlich ist. Solange die Förderpumpe ständig in Betrieb sein kann, ist die Anlaufphase zum Kaltfahren derselben von untergeordneter Bedeutung. Allerdings besteht bei Einsatz dieses Aufbereitungssystems in Kraftfahrzeugen aufgrund der stark unterschiedlichen Lastzustände und der dadurch bedingten unterschiedlich großen benötigten Wasserstoffmengen die Gefahr, daß sich die Förderpumpe während einer Stillstandphase aufwärmt und somit erneut zumindest partiell eine Kaltphase benötigt, in welcher sie nicht die erforderliche Leistung bringen kann.

Dies hat jedoch Probleme beim Betrieb des Motors zur Folge, da dieser dann, wenn er mit innerer Gemischbildung betrieben wird, Wasserstoff mit relativ konstant hohem Druck und definierter Temperatur, das heißt konstanter Dichte, benötigt, damit eine genaue Dosierung des Verbrennungsgemisches über die Einspritzventile möglich ist, was jedoch nicht erreichbar ist, wenn die Förderpumpe nach einer Stillstandsphase keine ausreichende Leistung mehr bringt, sondern wiederum eine kurze Kaltlaufphase benötigt.

Dieses Problem wurde dadurch zu lösen versucht, daß man die Förderpumpe in dem Speichertank getaucht angeordnet hat, so daß sie durch den gespeicherten Flüssigwasserstoff ständig kalt gehalten wird. Der Nachteil dieser Anordnung ist gravierend, da er zu sehr hohen Abdampfraten im Speichertank führt, die zu nicht tragbaren Gesamtverlusten durch verdampften Wasserstoff führen.

Der Erfindung liegt daher die Aufgabe zugrunde, ein Aufbereitungssystem für Flüssigwasserstoff derart zu verbessern, daß die Förderpumpe ständig auf Betriebstemperatur gehalten werden kann und außerdem eine möglichst geringe Abdampfrate im Speichertank erreichbar ist.

Diese Aufgabe wird bei einem Aufbereitungssystem der eingangs beschriebenen Art erfindungsgemäß dadurch gelöst, daß die Fördereinheit einen die Förderpumpe vollständig umgebenden Kühlspeichermantel aufweist, welcher von druckseitig aus der Förderpumpe austretendem Wasserstoff durchströmt ist. Der Kern der erfindungsgemäßen Lösung ist also darin zu sehen, daß die Förderpumpe zwar außerhalb des Speichertanks angeordnet ist, jedoch mit einem diesen umgebenden Kühlspeichermantel versehen ist, der von der Pumpe druckseitig ausgetretenen Wasserstoff enthält und die Förderpumpe auch bei intermittierendem Betrieb während der Stillstandsphasen auf seiner Betriebstemperatur hält, so daß die Förderpumpe keine weitere Kaltfahrphase benötigt.

Ein konstruktiv besonders einfaches und zweckmäßiges Ausführungsbeispiel des erfindungsgemäßen Aufbereitungssystems sieht vor, daß der Kühlspeichermantel als thermisch isolierter Druckbehälter ausgebildet ist, in dessen Behälterinnerem die Förderpumpe angeordnet ist. Diese Anordnung hat den großen Vorteil, daß sie konstruktiv sehr einfach auszuführen ist und ermöglicht es insbesondere, die Förderpumpe konstruktiv einfacher zu gestalten, da diese in einem Raum angeordnet ist, dessen Druck ungefähr dem maximalen Druck in der Förderpumpe ent spricht, so daß beispielsweise Außenwände der Förderpumpe dünner und weniger stabil sein können. Des weiteren hat dieser Aufbau den Vorteil, daß die thermische Isolation des Druckbehälters gleichzeitig auch als thermische Isolation für die Förderpumpe dient, so daß diese ihrerseits nicht mit zusätzlichen Isolationsmaßnahmen versehen sein muß.

Der Druckbehälter kann grundsätzlich auf verschiedenste Art und Weise thermisch isoliert sein. Besonders vorteilhaft ist es jedoch, wenn der Druckbehälter vakuumisoliert ausgebildet ist, da damit die Aufwärmrate im Behälterinneren sehr niedrig gehalten werden kann.

Insbesondere beim Einbau des erfindungsgemäßen Aufbereitungssystems für Flüssigwasserstoff in Kraftfahrzeugen muß, wie bereits eingangs dargelegt, mit intermittierendem Betrieb gerechnet werden. Des weiteren wird vorteilhafterweise die Förderpumpe als einzylindrige Kolbenpumpe ausgeführt, so daß zum Ausgleich der auftretenden Druckschwankungen bei den bisher bekannten Lösungen ein Druckausgleichsgefäß der Fördereinheit nachgeschaltet werden muß. Die erfindungsgemäße Lösung bietet nun die Möglichkeit, daß der Druckbehälter gleichzeitig als Druckausgleichsgefäß für das Aufbereitungssystem ausgebildet ist, so daß sich das Vorsehen eines zusätzlichen Druckausgleichsgefäßes erübrigt, was für den Einsatz des erfindungsgemäßen Aufbereitungssystems im Kraftfahrzeug den großen Vorteil bringt, daß das erfindungsgemäße Aufbereitungssystem wesentlich platzsparender ist.

Um dem Behälterinnern möglichst wenig Wärme zuzuführen, hat es sich als zweckmäßig erwiesen, wenn ein Pumpantrieb außerhalb des Druckbehälters angeordnet ist, so daß durch diesen eine möglichst geringe Wärmezufuhr zum Behälterinnern erfolgt und daher die Aufwärmrate optimal gering gehalten werden kann.

Im Rahmen der erfindungsgemäßen Lösung kann die Förderpumpe grundsätzlich in unterschiedlichster Art und Weise in dem Druckbehälter angeordnet sein. Um eine möglichst effektive Kühlung der Förderpumpe zu erreichen, ist es jedoch vorteilhaft, wenn diese im tiefstliegenden Bereich des Druckbehälters angeordnet ist, da sich in diesem der Wasserstoff mit der tiefsten Temperatur sammelt und damit eine optimale Kühlung der Förderpumpe erreichbar ist.

Um diesen Effekt zu verstärken, ist weiterhin vorgesehen, daß eine Auslaßöffnung der Förderpumpe im tiefstliegendem Bereich des Druckbehälters angeordnet ist, so daß der Wasserstoff mit der niedrigsten Temperatur zunächst die im tiefstliegenden Bereich des Druckbehälters angeordnete Förderpumpe umströmt und diesen möglichst effektiv kühlt.

Während des Betriebs des erfindungsgemäßen Aufbereitungssystems wird der Wasserstoff in dem Druckbehälter in der Regel unter derart hohen Drucken gehalten werden, die über dem kritischen Druck des Wasserstoffs liegen, so daß in dem Druckbehälter der Wasserstoff nicht mehr in zwei Phasen, das heißt eine Gas- und eine Flüssigphase, getrennt vorliegen wird, sondern in dem Druckbehälter nur noch eine Phase existieren wird. Somit könnte der Druckbehälter so ausgebildet werden, daß in dem Behälterinnern ungefähr überall die gleiche Temperatur vorliegt. Weit vorteilhafter ist es jedoch, wenn der Druckbehälter so ausgebildet ist, daß sich in diesem ein Kühlbad aus Wasserstoff bildet, in welches die Förderpumpe getaucht ist. Bei dieser Ausbildung des Druckbehälters ist es also möglich, trotz des nur in einer Phase vorliegenden Wasserstoffs einen Temperaturgradient zu erzeugen, um in dem Bereich mit den niedrigsten Temperaturen ein Kühlbad aus Wasserstoff zu schaffen, in welchem die Förderpumpe dann getaucht und damit optimal gekühlt angeordnet ist.

Am einfachsten läßt sich ein derartiges Kühlbad dann erreichen, wenn die Motorzuleitung oberhalb der Förderpumpe in den Druckbehälter mündet, so daß sich unterhalb der Mündung der Motorzuleitung in dem Druckbehälter dieses Kühlbad ausbilden kann.

Wenn der erfindungsgemäß ausgebildete Druckbehälter als Druckausgleichsgefäß dienen soll und damit im Rahmen des erfindungsgemäßen Aufbereitungssystems optimal arbeiten soll, ist es zweckmäßig, wenn der Druckbehälter mit einer Druckregeleinrichtung versehen ist, welche die Förderpumpe bei Überschreiten eines Maximaldrucks ausschaltet und bei Unterschreiten eines Minimaldrucks einschaltet.

Damit die Förderpumpe bei dem erfindungsgemäßen Aufbereitungssystem optimal arbeiten kann, ist es erforderlich, daß auch saugseitig der Förderpumpe ein konstanter Druck vorliegt. Um einen derart konstanten saugseitig der Förderpumpe herrschenden Druck zu erreichen, ist es erforderlich, den Betriebsdruck im Speichertank konstant zu halten. Hierzu ist im Rahmen der erfindungsgemäßen Lösung zweckmäßigerweise vorgesehen, daß vom Druckbehälter eine Druckleitung in den Speichertank führt, welche eine Druckregeleinrichtung für den Speichertank aufweist, mittels welcher ein Betriebsdruck im Speichertank einstellbar ist. Somit läßt sich der Druck in dem Druckbehälter erfindungsgemäß gleichzeitig dazu ausnützen, um auch im Speichertank während des Betriebs einen konstanten Betriebsdruck zu erreichen.

Bei dem erfindungsgemäßen Aufbereitungssystem für Flüssigwasserstoff kann die Förderpumpe einerseits wie bei den übrigen bekannten Aufbereitungssystemen mit außerhalb des Speichertanks angeordneter Förderpumpe kaltgefahren werden. Das heißt es ist beispielsweise zum Kaltfahren der Förderpumpe ein Betrieb des Motors mit äußerer Gemischbildung denkbar, so lange bis die Pumpe kalt genug ist, um Wasserstoff mit höheren Drücken zu erzeugen, oder es ist denkbar, den Motor zwar mit innerer Gemischbildung zu betreiben, die Einspritzung jedoch in der Nähe des unteren Totpunktes erfolgen zu lassen, wofür der Druck im Speichertank ausreicht. Andererseits ist es aber auch möglich, bei dem erfindungsgemäßen Aufbereitungsystem eine Anlaufsteuerung vorzusehen, welche ein Absperrventil in der Motorzuleitung schließt, die Förderpumpe einschaltet, über die Druckregeleinrichtung für den Speichertank den Tankdruck im Speichertank auf den Betriebsdruck erhöht und das Absperrventil in der Motorzuleitung erst bei Erreichen des vom Motor geforderten Minimaldrucks öffnet, so daß sich bei dem erfindungsgemäßen Aufbereitungssystem die Förderpumpe selbst so lange kaltfährt, bis ein für einen Betrieb mit normaler innerer Gemischbildung erforderlicher Minimaldruck erreichbar ist, bei welchem dann die Anlaufsteuerung das Absperrventil in der Motorzuleitung öffnet und ein Starten des Motors möglich ist.

Weitere Merkmale und Vorteile der Erfindung sind Gegenstand der nachfolgenden Beschreibung eines Ausführungsbeispiels sowie der zeichnerischen Darstellung.

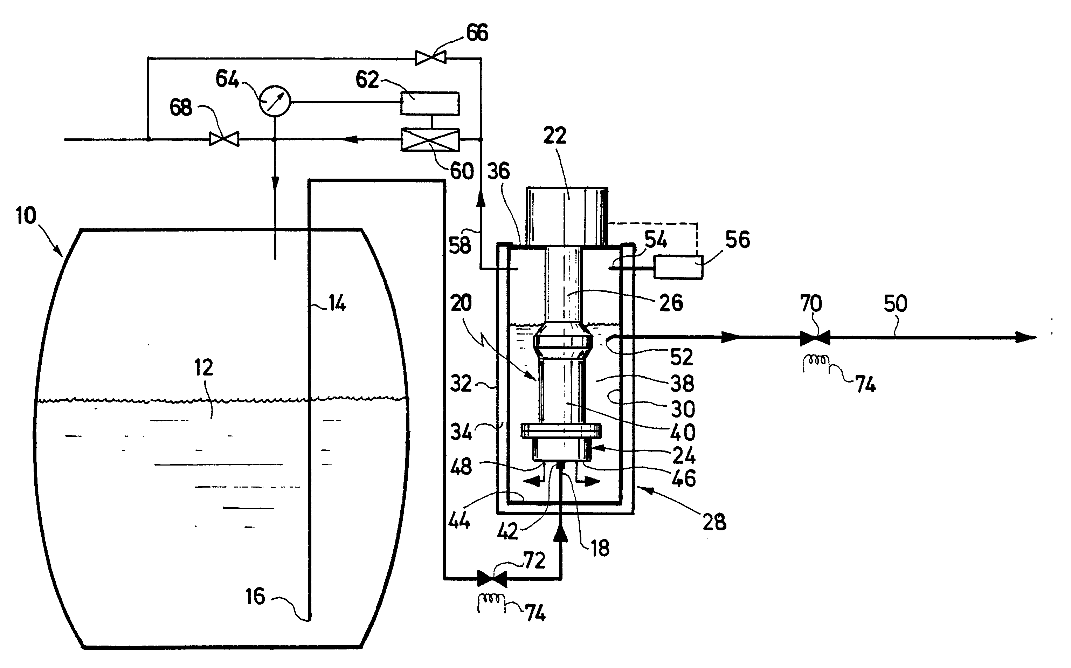

Die Zeichnung zeigt eine schematische Darstellung eines Ausführungsbeispiels eines erfindungsgemäßen Aufbereitungssystems.

Ein Ausführungsbeispiel des erfindungsgemäßen Aufbereitungssystems, dargestellt in der Figur, zeigt einen Speichertank 10 für Wasserstoff, in welchem ein Bad flüssigen Wasserstoffs 12 vorhanden ist. Dieser Speichertank 10 ist vorzugsweise gegenüber der Umgebung vakuumisoliert, um eine geringe Abdampfrate des Wasserstoffs zu erhalten. Der Speichertank 10 wird in der Regel drucklos oder auf einem geringen Überdruck von beispielsweise maximal 4 bar gehalten.

In den Speichertank 10 führt eine Saugleitung 14, welche einerseits mit ihrem Ansaugende 16 in den flüssigen Wasserstoff 12 eintaucht und andererseits mit ihrem Anschluß ende 18 mit einer als Ganzes mit 20 bezeichneten Fördereinheit verbunden ist.

Diese Fördereinheit 20 umfaßt einen Pumpantrieb 22, welcher eine Förderpumpe 24 über ein zwischen dem Pumpantrieb 22 und der Förderpumpe 24 angeordnetes Verbindungsteil 26 antreibt.

Sowohl das Verbindungsteil 26 als auch die Förderpumpe 24 sind in einem als Ganzes mit 28 bezeichneten Druckbehälter angeordnet, welcher aus einem Innenbehälter 30, einem Außenbehälter 32 und einer zwischen diesen vorgesehenen Vakuumisolation 34 aufgebaut ist. Dieser Druckbehälter 28 ist auf seiner Oberseite durch einen Deckel 36 verschlossen, welcher den Pumpantrieb 22 trägt, und von welchem ausgehend sich das Verbindungsteil 26 in ein Behälter inneres 38 hinein erstreckt, so daß die Förderpumpe 24 mit ihrem Pumpengehäuse 40 vollständig in dem Behälterinneren 38 liegt.

Die Saugleitung 14 ist daher ebenfalls in das Behälterinnere 38 hineingeführt und an einen Ansaugstutzen 42 des Pumpengehäuses 40 angeschlossen.

Bei dem in der Zeichnung dargestellten Ausführungsbeispiel erstrecken sich das Verbindungsteil 26 und das an diesem gehaltene Pumpengehäuse 40, ausgehend von dem den Druckbehälter 28 auf seiner Oberseite verschliessenden Deckel 36, in vertikaler Richtung nach unten zu einem Boden 44 des Druckbehälters 28. Der Ansaugstutzen 42 ist bei diesem Ausführungsbeispiel auf einer dem Boden 44 des Druckbehälters 28 zugewandten Unterseite 46 des Pumpengehäuses 40 angeordnet. Desgleichen ist auf dieser Unterseite 46 eine Auslaßöffnung 48 des Pumpengehäuses 40 vorgesehen, so daß aus dieser Auslaßöffnung 48 austretender unter Druck stehender Wasserstoff das gesamte Pumpengehäuse 40 umströmen kann.

Vorzugsweise ist der Druckbehälter 28 so dimensioniert, daß das für druckbeaufschlagten Wasserstoff zur Verfügung stehende Volumen groß genug ist, so daß der Druckbehälter 28 selbst als Druckausgleichsgefäß dienen kann und somit zwei Funktionen erfüllt, nämlich einerseits das Pumpengehäuse 40 kühlt und andererseits das ohnehin bei intermittierendem Betrieb der Förderpumpe 24 erforderliche Druckausgleichsgefäß bildet.

Um den unter Druck stehenden Wasserstoff aus dem Druckbehälter 28 entnehmen zu können, ist eine in diesen hineinführende Motorzuleitung 50 vorgesehen, durch welche der unter Druck stehende Wasserstoff dann dem Verbrennungsmotor zugeführt wird. Diese Motorzuleitung 50 hat eine Einströmöffnung 52, welche in dem Behälterinneren 38 so angeordnet ist, daß der aus der Auslaßöffnung 48 austretende verdichtete Wasserstoff längs des gesamten Pumpengehäuses 40 strömt und erst dann die Einströmöffnung 52 der Motorzuleitung erreicht. Bei der in diesem Ausführungsbeispiel dargestellten senkrechten Anordnung des Pumpengehäuses liegt die Einströmöffnung 52 im Behälterinneren 38 oberhalb des Pumpengehäuses 40.

Damit die gesamte Fördereinheit 20 Wasserstoff mit relativ konstantem und hohem Druck sowie definierter Temperatur dem Motor über die Motorzuleitung 50 zuführen kann, muß der Druck in dem gleichzeitig als Druckausgleichsgefäß dienenden Druckbehälter 28 konstant gehalten werden. Hierzu ragt in den Druckbehälter 28, beispielsweise nahe seines Deckels 36 ein Druckfühler 54, welcher mit einer Steuerung 56 verbunden ist, die den Pumpenantrieb 22 dann abschaltet, wenn ein Maximaldruck im Druckbehälter erreicht ist und dann einschaltet, wenn der Druck im Druckbehälter 28 auf einen Minimaldruck gefallen ist.

Ferner führt aus dem Druckbehälter 28 noch eine Druckleitung 58 beispielsweise im Bereich nahe des Deckels 36 heraus, welche in den Speichertank 10 mündet. Diese Druckleitung 58 ist zusätzlich noch mit einem Ventil 60 versehen, mit welchem ein Überströmen von Wasserstoff von dem Druckbehälter 28 in den Speichertank 10 zu und abschaltbar ist. Dieses Ventil 60 steht außerdem noch mit einer Steuerung 62 in Verbindung, welcher außerdem noch ein Druckfühler 64 zugeordnet ist, der den Druck im Speichertank 10 erfaßt.

Zur Sicherheit zweigt von der Druckleitung 58 vor dem Ventil 60 noch ein Sicherheitsventil 66 ab, welches auf den Maximaldruck des Druckbehälters 28 eingestellt ist und außerdem ist noch ein von der Druckleitung 58 nach dem Ventil 60 abzweigendes Überdruckventil 68 vorgesehen, welches auf einen Höchstdruck des Speichertanks 10 eingestellt ist und damit ein Übersteigen dieses Höchstdrucks im Speichertank 10 verhindert.

Um das erfindungsgemäße Aufbereitungssystem in geeigneter Weise betreiben zu können, ist in der Motorzuleitung 50 ein motorseitiges Absperrventil 70 und außerdem in der Saugleitung 14 ein tankseitiges Absperrventil 72 vorgesehen, die vorzugsweise beide über eine Anlaufsteuerung 74 betätigbar sind.

Das erfindungsgemäße Aufbereitungssystem funktioniert nun folgendermaßen:

In abgeschaltetem Zustand ist sowohl das tankseitige Absperrventil 72 als auch das motorseitige Absperrventil 70 verschlossen. Außerdem wird der Speichertank 10 entweder drucklos oder auf einem geringen Überdruck gehalten.

Soll nun die Fördereinheit 20, das heißt insbesondere deren Förderpumpe 24, kaltgefahren werden, so wird zunächst das tankseitige Absperrventil 72 geöffnet und die Fördereinheit 20 eingeschaltet, so daß deren Pumpenantrieb 22 die Förderpumpe 24 treibt. Diese Förderpumpe 24 beginnt nun, ohne optimal zu arbeiten, über die Saugleitung 14 Wasserstoff anzusaugen, was gleichzeitig dadurch unterstützt wird, daß der Speichertank 10 auf einem geringfügigen Überdruck gehalten wird. Somit wird die Saugleitung 14 von dem bereits in dieser verdampfenden Wasserstoff durchströmt, welcher dann die Förderpumpe 24 passiert und aus dessen Auslaßöffnung 48 in das Behälterinnere 38 des Druckbehälters 28 austritt. Da die Förderpumpe 24 läuft, wird in dem Behälterinnern 38 ein Druck aufgebaut, welcher höher liegt als der Druck in der Saugleitung 14. Um diesen sich im Behälterinneren 38 aufbauenden Druck auszunützen, wird von der Anlaufsteuerung 74 über die Steuerung 62 das Ventil 60 in der vom Druckbehälter 28 zum Speichertank 10 führenden Druckleitung 58 geöffnet, so daß der sich im Behälterinneren aufbauende Überdruck auch eine Druckerhöhung im Speichertank 10 zur Folge hat, wobei allerdings der Druck im Speichertank 10 einen durch das Überdruckventil 68 festgelegten Höchstdruck im Speichertank 10 nicht überschreitet. Durch diese Druckerhöhung im Speichertank 10 wird der Zufluß von flüssigem Wasserstoff zu der Förderpumpe 24 über die Saugleitung 14 gesteigert, so daß die Förderpumpe 24 sehr schnell einen ausreichenden Druck im Druckbehälter 28 aufbauen kann. Hierbei wird die Förderpumpe gleichzeitig kaltgefahren und durch den im Behälterinneren 38 verbleibenden Wasserstoff kalt gehalten. Sobald nun ein ausreichender Druck im Druckbehälter 28 vorhanden ist, wird das motorseitige Absperrventil 70 durch die Anlaufsteuerung 74 geöffnet, so daß über die Motorzulaufleitung 50 Wasserstoff aus dem Druckbehälter 28 entnommen werden kann. Die Steuerung 62 mit dem Druckfühler 64 hält weiterhin den Speichertank 10 auf dem für diesen vorgesehenen Höchstdruck während des Betriebs.

Je nach dem welche Wasserstoffmenge über die Motorzuleitung 50 entnommen wird, wird die Förderpumpe in kleineren oder größeren Intervallen durch die Steuerung 56 ein-und ausgeschaltet, abhängig von dem vom Druckfühler 54 im Druckbehälter 28 festgestellten Druck.

Im Betriebszustand wird dabei mit einem Minimaldruck von 70 bar und einem Maximaldruck von 95 bar im Druckbehälter 28 gearbeitet. Bei diesen Drücken ist der Wasserstoff im Behälterinneren 38 in einem überkritischen Bereich, das heißt es liegt keine Trennung zwischen Flüssigphase und Gasphase vor. Dennoch wird sich im Druckbehälter von dessen Boden 44 zu dessen Deckel 36 ein Temperaturgradient einstellen, so daß in erster Linie davon gesprochen werden kann, daß die Förderpumpe 24 in einem Wasserstoffbad angeordnet ist, welches vom Boden 44 bis zu der über dem Verdichter 24 angeordneten Einströmöffnung 52 der Motorzuleitung reicht.

Wird nun die Förderpumpe 24 nach Erreichen des Maximaldrucks von 95 bar abgeschaltet, so verbleibt diese mit ihrem Pumpengehäuse 40 stets noch in dem vom Boden 44 bis zur Einströmöffnung 52 reichenden Bad aus Wasserstoff und wird von diesem auf seiner Betriebstemperatur kalt gehalten. Die weitere Entnahme von Wasserstoff aus dem Druckbehälter 28 über die Motorzuleitung 50 führt nun zu einem Abfallen des Drucks, wobei der Minimaldruck spätestens dann erreicht wird, wenn das Bad aus Wasserstoff lediglich bis zur Einströmöffnung 52 der Motorzuleitung 50 reicht. Da, wie bereits im vorstehenden beschrieben, die Einströmöffnung 52 jedoch über dem Pumpengehäuse 40 der Förderpumpe 24 angeordnet ist, ist diese beim Einschalten immer noch in das Bad eingetaucht und daher auf ihrer Betriebstemperatur gehalten, so daß nach Einschalten der Förderpumpe 24 diese sofort mit der vollen Leistung fördern kann und keine erneute Anlaufphase benötigt.

## Ansprüche

1. Aufbereitungssystem für Flüssigwasserstoff mit einem Speichertank, und mit einer über eine Saugleitung mit dem Speichertank verbundenen und außerhalb desselben angeordneten Fördereinheit, umfassend eine Förderpumpe, welche druckseitig mit einer Motorzuleitung in Verbindung steht, **dadurch gekennzeichnet,** daß die Fördereinheit einen die Förderpumpe (24) vollständig umgebenden Kühlspeichermantel (28) aufweist, welcher von druckseitig aus der Förderpumpe (24) austretendem Wasserstoff durchströmt ist.

2. Aufbereitungssystem nach Anspruch 1, dadurch gekennzeichnet, daß der Kühlspeichermantel als thermisch isolierter Druckbehälter (28) ausgebildet ist, in dessen Behälterinnerem (38) die Förderpumpe (24) angeordnet ist.

3. Aufbereitungssystem nach Anspruch 2, dadurch gekennzeichnet, daß der Druckbehälter (28) vakuumisoliert ausgebildet ist.

4. Aufbereitungssystem nach Anspruch 2 oder 3, dadurch gegekennzeichnet, daß der Druckbehälter (28) gleichzeitig als Druckausgleichsgefäß für das Aufbereitungssystem ausgebildet ist.

5. Aufbereitungssystem nach einem der voranstehenden Ansprüche, dadurch gekennzeichnet, daß ein Pumpenantrieb (22) außerhalb des Druckbehälters (28) angeordnet ist.

6. Aufbereitungssystem nach einem der Ansprüche 2 bis 5, dadurch gekennzeichnet, daß die Förderpumpe (24) im tiefstliegenden Bereich des Druckbehälters (28) angeordnet ist.

7. Aufbereitungssystem nach Anspruch 6, dadurch gekennzeichnet, daß eine Auslaßöffnung (48) der Förderpumpe (24) im tiefstliegenden Bereich des Druckbehälters (28) angeordnet ist.

8. Aufbereitungssystem nach einem der Ansprüche 2 bis 7, dadurch gekennzeichnet, daß der Druckbehälter (28) so ausgebildet ist, daß sich in diesem ein Kühlbad aus Wasserstoff bildet, in welches die Förderpumpe (24) eingetaucht ist.

9. Aufbereitungssystem nach einem der Ansprüche 2 bis 8, dadurch gekennzeichnet, daß die Motorzuleitung (50) oberhalb der Förderpumpe (24) in den Druckbehälter (28) mündet.

10. Aufbereitungssystem nach einem der voranstehenden Ansprüche, dadurch gekennzeichnet, daß der Druckbehälter (28) mit einer Druckregeleinrichtung (54, 56) versehen ist, welche die Förderpumpe (24) bei Überschreiten eines Maximaldrucks ausschaltet und bei Unterschreiten eines Minimaldrucks einschaltet.

11. Aufbereitungssystem nach einem der Ansprüche 2 bis 10, dadurch gekennzeichnet, daß vom Druckbehälter eine Druckleitung (58) in den Speichertank (10) führt, welche eine Druckregeleinrichtung (60, 62, 64) für den Speichertank (10) aufweist, mittels welcher ein Betriebsdruck im Speichertank (10) einstellbar ist.

12. Aufbereitungssystem nach Anspruch 11, dadurch gekennzeichnet, daß eine Anlaufsteuerung (74) vorgesehen ist, welche ein Absperrventil (70) in der Motorzuleitung (50) schließt, die Förderpumpe (24) einschaltet, über die Druckregeleinrichtung (60, 62, 64) für den Speichertank (10) den Tankdruck im Speichertank (10) auf den Betriebsdruck erhöht und das Absperrventil (70) bei Erreichen es vom Motor geforderten Minimaldrucks öffnet.